(19) Europäisches Patentamt
European Patent Office
Office européen des brevets

(11) EP 2 140 639 B1

(12) **EUROPÄISCHE PATENTSCHRIFT**

(45) Veröffentlichungstag und Bekanntmachung des Hinweises auf die Patenterteilung:
**13.04.2011 Patentblatt 2011/15**

(21) Anmeldenummer: **08707739.2**

(22) Anmeldetag: **15.02.2008**

(51) Int Cl.:
***H04L 25/02*** *(2006.01)*

(86) Internationale Anmeldenummer:
**PCT/EP2008/001178**

(87) Internationale Veröffentlichungsnummer:
**WO 2008/116534 (02.10.2008 Gazette 2008/40)**

(54) **VERFAHREN UND VORRICHTUNG ZUR ERMITTLUNG EINER UNVERKÜRZTEN KANALIMPULSANTWORT IN EINEM OFDM-ÜBERTRAGUNGSSYSTEM**

METHOD AND DEVICE FOR DETERMINING AN UNABBREVIATED CHANNEL IMPULSE RESPONSE IN AN OFDM TRANSMISSION SYSTEM

PROCÉDÉ ET DISPOSITIF DE DÉTERMINATION D'UNE RÉPONSE IMPULSIONNELLE DE CANAL NON RACCOURCIE DANS UN SYSTÈME DE TRANSMISSION OFDM

(84) Benannte Vertragsstaaten:
**DE FR GB**

(30) Priorität: **26.03.2007 DE 102007014385**
**23.05.2007 DE 102007023881**

(43) Veröffentlichungstag der Anmeldung:
**06.01.2010 Patentblatt 2010/01**

(73) Patentinhaber: **Rohde & Schwarz GmbH & Co. KG**
**81671 München (DE)**

(72) Erfinder:
- **GALDA, Dirk**
**85540 Haar (DE)**
- **SCHMIDT, Kurt**
**85567 Grafing (DE)**
- **BALZ, Christoph**
**81543 München (DE)**

(74) Vertreter: **Körfer, Thomas**
**Mitscherlich & Partner**
**Patent- und Rechtsanwälte**
**Sonnenstrasse 33**
**80331 München (DE)**

(56) Entgegenhaltungen:
**EP-A- 1 748 610** **US-A1- 2005 135 324**
**US-A1- 2006 239 177**

- **VITTORIA MIGNONE ET AL: "CD3-OFDM: A Novel Demodulation Scheme for Fixed and Mobile Receivers" IEEE TRANSACTIONS ON COMMUNICATIONS, IEEE SERVICE CENTER, PISCATAWAY, NJ, US, Bd. 44, Nr. 9, 1. September 1996 (1996-09-01), XP011008784 ISSN: 0090-6778**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 140 639 B1

Printed by Jouve, 75001 PARIS (FR)

## Beschreibung

Die Erfindung betrifft ein Verfahren und eine Vorrichtung zur Ermittlung einer unverkürzten Kanalimpulsantwort in einem OFDM-Übertragungssystems.

In der digitalen Rundfunktechnik kommen zur Verringerung der erforderlichen Sendeleistung verstärkt zelluläre Gleichwellennetze (SFN: single frequency networks) zum Einsatz. In einem zellulären Gleichwellennetz wird ein identisches Sendesignal durch mehrere in regional verteilten Zellen stationierten Sender zeit- und frequenzsynchron gesendet. Das korrespondierende Empfangssignal setzt sich in einem zellulären Gleichwellennetz aus den additiven überlagerungen der einzelnen, um die entfernungsabhängige Signallaufzeit verzögerten und mit der unabhängigen Kanalimpulsantwort gefalteten Sendesignale zusammen.

Aufgrund identischer Sendesignale kann der Übertragungskanal in einem zellulären Gleichwellennetz deshalb durch eine virtuelle Kanalimpulsantwort charakterisiert werden. Die Länge dieser virtuellen Kanalimpulsantwort hängt von der maximalen Laufzeitdifferenz zwischen zwei am weitesten voneinander entfernten Sendern und der maximalen Umwegelaufzeit des Mehrwegekanals ab. Aufgrund der in der digitalen Rundfunktechnik üblichen Zellgröße von 30 km und mehr können damit Kanalimpulsantwortlängen von mehr als 100 $\mu$s auftreten. Die virtuelle Kanalimpulsantwort wird dabei von einigen zeitlich gegeneinander verschobenen Echoclustern mit einer Länge von typischerweise weniger als 10 $\mu$s, die in der Regel jeweils einem Sender zugeordnet werden, bestimmt.

Für den korrekten Betrieb eines Gleichwellenetzes ist die genaue Kenntnis des Verhaltens des Übertragungskanal wesentlich. Die hierzu erforderliche Vermessung des Übertragungskanals durch Schätzung bedingt eine optimale Rekonstruktion der virtuellen Kanalimpulsantwort.

Zur Bestimmung der virtuellen Kanalimpulsantwort werden in einem OFDM-(Orthogonal Frequency Division Multiplex)-Übertragungssystem Pilotsymbole in einem bestimmten Frequenz-Zeit-Raster des aus Frequenzträgern und Symboldauern zusammengesetzten Frequenz-Zeit-Übertragungsrahmens übertragen. Innerhalb einer Symboldauer des Frequenz-Zeit-Übertragungsrahmens sind die für die Bestimmung der Kanalimpulsantwort zu übertragenden Pilotsymbole in einem dem Nutzdatenintervall vorgelagerten bzw. nachgelagerten Guard-Intervall angeord-net.

Solange die Dauer der virtuellen Kanalimpulsantwort kürzer als die Länge des Guard-Intervalls ist, kann die virtuelle Kanalimpulsantwort störungsfrei im Guard-Intervall rekonstruiert werden. Auch die Rekonstruktion des im Nutzdatenintervall übertragenen Nutzdaten-Symbols erfolgt problemlos.

Erstreckt sich die virtuelle Kanalimpulsantwort über die Länge des Guard-Intervalls, so kommt es zwischen den Pilotsymbolen und den Nutzdatensymbolen zu Inter-Symbol-Interferenzen, die den Empfang der Nutzdatensymbole verschlechtern und auch die Rekonstruktion der Kanalimpulsantwort aus den übertragenen Pilotsymbolen nicht mehr ermöglichen.

Um die Nutzdatensymbole korrekt zu rekonstruieren, wird nach dem Stand der Technik - wie beispielsweise in der DE 100 05 287 A1 offenbart - die Kanalschätzung auf der Basis von Pilotsymbolen folgendermaßen durchgeführt:

> Die Pilotsymbole werden gemäß Fig. 1A in einem Raster von jeweils $N_F$ Frequenzträgern in der aus insgesamt $N_C$ Frequenzträgern bestehenden Übertragungsbandbreite positioniert. Die mittels eines Schätzers im Empfänger aus den Pilotsymbolen ermittelte diskrete Kanalübertragungsfunk - tion $\hat{H}_k$ des OFDM-Übertragungskanals ergibt im Zeitbereich gemäß Fig. 1B eine mit der Periodizität $\frac{N_C}{N_F}$ periodisch fortgesetzte Impulsantwort $h(n)$. Die Schätzung der Kanalübertragungsfunktion $\tilde{H}_k$ in den von Pilotsymbolen nicht besetzten Frequenzträgern erfolgt gemäß Fig. 1C durch Interpolation aus den geschätzten Werten der Kanalübertragungsfunktion $\hat{H}_k$ in den mit Pilotsymbolen belegten Frequenzträgern mittels Interpolationsfilter. Die Interpolation bedingt im Zeitbereich gemäß Fig. 1D eine Fensterung bzw. Bandbegrenzung der Impulsantwort $h(n)$ in Höhe der Filterlänge $F_I$ des Interpolationsfilters (grau punktierter, trapezförmiger Bereich in Fig. 1D).

Durch geeignete Dimensionierung des Frequenzrasters $N_F$ der Pilotsymbole ist die Dauer der Kanalimpulsantwort kleiner als die Periodendauer der periodisch fortgesetzten einzelnen Kanalimpulsantworten zu halten, um damit ein Aliasing zwischen den einzelnen periodisch fortgesetzten Kanalimpulsantworten als Voraussetzung für eine korrekte Rekonstruktion der Kanalimpulsantwort zu vermeiden. Hierzu ist gemäß Gleichung (1) das Verhältnis des Frequenzrasters $N_F$ der Pilotsymbole in Relation zur Systembandbreite $N_C$ des OFDM-Übertragungskanals größer als die Länge $N_G$ des Guard-Intervalls zu gestalten.

$$N_G \leq \frac{N_C}{N_F} \quad (1)$$

Außerdem ist die Filterlänge $F_I$ des Interpolationsfilters so auszulegen, dass die periodischen Fortsetzungen der Kanalimpulsantwort unterdrückt werden. Die Filterlänge $F_I$ des Interpolationsfilters muss deshalb kleiner als das Verhältnis des Frequenzrasters $N_F$ der Pilotsymbole in Relation zur Systembandbreite $N_C$ des OFDM-Übertragungskanals ausgelegt sein.

Weist die Kanalimpulsantwort eine kürzere Dauer als die Filterlänge $F_I$ des Interpolationsfilters auf, so kann gemäß Fig. 1D die Kanalimpulsantwort korrekt rekonstruiert werden.

Ist jedoch die Dauer der Kanalimpulsantwort, wie in Fig. 1E dargestellt ist, länger als die gewählte Filterlänge $F_I$ des Interpolationsfilters, so wird ein Teil der Kanalimpulsantwort durch die Bandbegrenzung der Interpolation unterdrückt. Eine korrekte Rekonstruktion der Kanalimpulsantwort ist in diesem Fall nicht möglich.

Um den negativen Einfluss der Bandbegrenzung des Interpolationsfilters auf die Rekonstruktion der Kanalimpulsantwort zu beseitigen, wird herkömmlicherweise die Interpolation durch eine aufwändigere Kanalschätzung mittels Pilotsymbolen in einem feineren Frequenzraster ersetzt. Bei einer um den Faktor Q feineren Schätzung der Kanalübertragungsfunktion mittels Pilotsymbolen im Frequenzbereich (Faktor Q<1) gemäß Fig. 2A vergrößert sich die Periodendauer der periodisch fortgesetzten Kanalimpulsantwort um den gleichen Faktor Q im Zeitbereich gemäß Fig. 2B. Die Dauer der Kanalimpulsantwort kann folglich um diesen Faktor Q verlängert sein, ohne eine fehlerhafte Rekonstruktion zu bewirken. Hat sich die Dauer $N_G$ des Guard-Intervalls in Fig. 2A gegenüber der Situation in Fig. 1B bzw. 1D und 1E nicht verändert, so kann die Kanalimpuleantwort $\hat{h}$ gemäß Gleichung (2) durch eine inverse Fourier-Transformation aus der geschätzten Kanalübertragungefunktion $\hat{H}$ fehlerfrei rekonstruiert werden, auch wenn die Dauer der Kanalimpulsantwort $\hat{h}$ über die Länge $N_G$ des Guard-Intervalls hinausreicht.

$$\hat{h} = F^{-1}\left\{\hat{H}\right\} \quad (2)$$

Eine fehlerfreie Rekonstruktion einer Kanalimpulsantwort, deren Dauer sich über die gesamte Symboldauer erstreckt, setzt aber eine Belegung jedes der $N_C$ Frequenzträger mit Pilotsymbolen voraus. Da auf diese Weise keine Nutzdatensymbole mehr übertragen werden können, scheidet eine derartige Vorgehensweise im Fall einer zu rekonstruierenden Kanalimpulsantwort mit einer sehr langen Dauer in der Praxis aus.

Während für den laufenden Betrieb eines OFDM-Übertragungssystems durch geeignete Wahl des Frequenzrasters $N_F$ der Pilotsymbole und durch geeignete Wahl der Filterlänge $F_I$ des Interpolationsfilters eine fehlerhafte Rekonstruktion der Kanalimpulsantwort vermeidbar ist, muss bei der Vermessung von Mobilfunknetzen, bei der im laufenden Netzbetrieb keine Möglichkeit der Anpassung des Frequenzrasters $N_F$ der Pilotsymbole und der Filterlänge $F_I$ des Interpolationsfilters besteht, die Kanalimpulsantwort auch bei einem wie in Fig. 1E dargestellten Fall korrekt rekonstruiert werden können.

Bei Messungen im Netzbetrieb des zellulären Gleichwellennetzes kann beispielsweise aus der korrekt rekonstruierten virtuellen Kanalimpulsantwort überprüft werden, ob die durch die maximale regionale Entfernung zweier Sender des zellulären Gleichwellennetzes bedingte maximale Laufzeitdifferenz der zugehörigen Sendesignale innerhalb der vom Empfänger maximal verarbeitbaren Länge der Kanalimpulsantwort liegt. Auch können aus einer korrekt rekonstruierten virtuellen Kanalimpulsantwort die einzelnen zu einem Sender gehörigen Echos identifiziert und aus der Doppler-Verschiebung der zu den einzelnen Sendern gehörigen Echos der Frequenzgleichlauf der einzelnen Sender überwacht werden.

Aufgabe der Erfindung ist es deshalb, ein Verfahren und eine Vorrichtung zur korrekten Bestimmung der virtuellen Kanalimpulsantwort eines OFDM-Übertragungskanals in einem zellulären Gleichwellennetz zu schaffen, bei der die Dauer der virtuellen Kanalimpulsantwort über die Filterlänge des Interpolationsfilters bzw. über die Dauer des Guard-Intervalls hinausreicht.

Die Erfindungsaufgabe wird durch ein erfindungsgemäßes Verfahren zur Ermittlung der Kanalimpulsantwort mit den Merkmalen des Anspruchs 1 und durch eine erfindungsgemäße Vorrichtung zur Ermittlung der Kanalimpuleantwort mit den Merkmalen des Anspruchs 5 gelöst. Vorteilhafte Weiterbildungen sind in den Unteransprüchen angegeben.

Erfindungsgemäß wird die mittels Schätzung und Interpolation ermittelte Kanalübertragungs funktion, die unter Umständen aufgrund der Interpolation eine verkürzte Kanalimpulsantwort aufweist, durch erneute Bestimmung auf der Basis der zu den einzelnen Frequenz-Zeit-Positionen empfangenen Symbole und der aus den empfangenen Symbolen mittels Entscheidung geschätzten gesendeten Symbolen optimiert. Unter der Voraussetzung, dass die Schätzung zum in der jeweiligen Frequenz-Zeit-Position tatsächlich gesendeten Symbol führt, wird auf diese Weise die in der jeweiligen Frequenz-Zeit-Position korrekte Kanalübertragungefunktion bestimmt. Die auf diese Weise optimierte Kanalübertragungsfunktion weist im Gegensatz zu der mittels Schätzung und Interpolation ermittelten Kanalübertragungsfunktion eine Kanalimpulsantwort mit einer vollständigen Länge auf, die sich nicht nur über Filterlänge des Interpolationsfilters, sondern auch über die Dauer des Guard-Intervalls - im Extremfall über die gesamte Symboldauer - erstrecken kann.

Die Korrektheit der Schätzung des in der jeweiligen Frequenz-Zeit-Position gesendeten Symbols kann verbessert werden, indem vor der Schätzung des gesendeten Symbols eine Entzerrung des in der jeweiligen Frequenz-Zeit-Position empfangenen Symbole, das im Übertragungskanal verzerrt wird, mit der inversen, aus Schätzung und Interpolation ermittelten Kanalübertragungsfunktion durchgeführt wird.

Die Entscheidung des in der jeweiligen Frequenz-Zeit-Position gesendeten Symbole kann zusätzlich optimiert werden, indem in Serie zu einer ersten "harten Entacheidung" - direkte Rückgewinnung der gesendeten Bitsequenz aus den empfangenen Symbolen beispielsweise durch Minimierung der euklidischen Distanz zwischen dem empfangenen Symbol und sämtlichen Symbolen des zum verwendeten Modulationsverfahrens gehörigen Symbolalphabets im Konstellationsdiagramm - eine zweite, die erste "harte Entscheidung" optimierende "weich Entscheidung" - Gewinnung von Zuverlässigkeits- bzw. Wahrscheilichkeitswerten der gesendeten Bitsequenz - durchgeführt wird. Durch Kombination einer "harten Entscheidung" mit einer "weichen Entscheidung" können aus "harten Bits" und Zuverlässigkeitswerten in einer Remodulation optimierte Schätzwerte für die gesendete Bitsequenz ermittelt werden.

Das erfindungsgemäße Verfahren und die erfindungsgemäße Vorrichtung zur Ermittlung einer unverkürzten Kanalimpulsantwort in einem OFDM-Übertragungssystem wird im folgenden anhand der Zeichnung im Detail erläutert. Die Figuren der Zeichnung zeigen:

| | |
|---|---|
| Fig. 1A, 1B, | ein Frequenzdiagramm einer mittels Pilotsymbolen geschätzten Kanalüber- tragungsfunktion und ein Zeitdiagramm der zugehörigen Kanalimpulsantwort, |
| Fig. 1C, 1D | ein Frequenzdiagramm einer geschätzten und interpolierten Kanalübertragungs- funktion und ein Zeitdiagramm der zuge- hörigen Kanalimpulsantwort, |
| Fig. 1E | ein Zeitdiagramm einer mittels Interpo- lation bandbegrenzten Kanalimpulsant- wort, |
| Fig. 2A, 2B | ein Frequenzdiagramm eines mittels Pi- lotsymbolen in einem feineren Frequenz- raster geschätzten Kanalübertragungs- funktion und ein Zeitdiagramm der zuge- hörigen Kanalimpulsantwort, |
| Fig. 3 | ein Blockdiagramm einer erfindungsge- mäßen Vorrichtung zur Ermittlung einer unverkürzten Kanalimpulsantwort und |
| Fig. 4 | ein Flussdiagramm eines erfindungsge- mäßen Verfahrens zur Ermittlung einer unverkürzten Kanalimpulsantwort. |

Bevor die erfindungsgemäße Vorrichtung und das erfindungsgemäße Verfahren zur Ermittlung einer unverkürzten Kanalimpule-antwort in einem OFDM-Übertragungunssystem im Detail anhand der Figuren 3 und 4 im Detail erläutert werden, werden im folgenden die für das Verständnis der Erfindung erforderlichen mathematischen Grundlagen hergeleitet.

Sendeseitig wird in einem OFDM-Übertragungasystem das n-te komplexwertige OFDM-Sendesymbol im k-ten Frequenzträger mittels Fourier-Transformation gemäß Gleichung (3) in einen 1-ten Abtastwert des komplexwertigen zu sendenden Signals sn, 1 transformiert, bevor es ins Hochfrequenzband gemischt wird.

$$s_{n,l} = \frac{1}{\sqrt{N_C}} \cdot \sum_{k=0}^{N_C-1} S_{n,k} \cdot e^{j2\pi kl/N_C} \qquad l = -N_G, \ldots, N_C - 1 \qquad (3)$$

Die Nutzdatensymbole können dabei dem Symbolalphabet eines M-wertigen kohärenten (M-QAM,M-(A)PSK) oder eines M-wertigen differenziellen (M-D(A)PSK) Modulationsverfahrens entnommen werden. Die einzelnen Sendersymbole $S_{n,k}$ sind dabei hinsichtlich ihrer Signalleistung auf den Wert $\sigma_S^2$ normiert. Neben den Nutzdatensymbolen werden in einem bestimmten Frequenz-Zeit-Raster Pilotsymbole in die einzelnen Frequenzträger und Symbolintervalle eingestreut. Die Pilotsymbole sind in einem niederwertigeren Modulationsverfahren - typischerweise PSK-Modulation - moduliert und weisen gegenüber den Nutzdatensymbolen eine höhere mittlere Signalleistung auf.

Während der Übertragung über den OFDM-Übertragungskanal erfolgt eine Faltung des Sendesignals $s(t)$ mit der Kanalimpulsantwort $h(t)$ des OFDM-Übertragungskanals und eine additive Überlagerung mit einem Gauß-verteilten, weißen unkorrelierten Kanalrauschen (AWGN) $n(t)$ mit der Rauschleistung $\sigma_N^2$, so dass sich gemäß Gleichung (4) das Empfangssignal $r(t)$ ergibt.

$$r(t) = s(t) * h(t) + n(t) \qquad (4)$$

Nachdem im Empfänger das im Sender in das Sendesignal hinzugefügte Guard-Intervall aus dem Empfangssignal $r(t)$ entfernt und das Empfangssignals $r(t)$ in den Frequenzbereich transformiert worden ist, ergibt sich ausgehend von Gleichung (4) die in Gleichung (5) dargestellte Beziehung für das komplexwertige Empfangsymbol $R_{n,k}$:

$$R_{n,k} = H_{n,k} \cdot S_{n,k} + N_{n,k} \qquad (5)$$

Der Übertragungsfaktor $H_{n,k}$ der Kanaltibertragungsfunktion im n-ten Symbolintervall und k-ten Frequenzträger ergibt sich dabei gemäß Gleichung (6) durch Fourier-Transformation der virtuellen Kanalimpulsantwort $h(\tau, n \cdot T_S)$:

$$H_{n,k} = \sum_{k=0}^{N_C-1} h(\tau, n \cdot T_S) \cdot e^{-j2\pi kn/N_C} \qquad (6)$$

Hierbei stellt $\tau$ die mittlere Signallaufzeit des OFDM-Übertragungssystems im zellulären Gleichwellennetz und $T_S$ das gemäß Gleichung (7) aus dem Nutzdatenintervall $T$ und dem Guard-Intervall $T_G$ zusammengesetzte Symbolintervall dar.

$$T_S = T + T_G \qquad (7)$$

Die virtuelle Kanalimpulsantwort $h(\tau, n \cdot T_S)$ wiederum ergibt sich gemäß Gleichung (8) aus der Überlagerung der Pfadgewichte $h_{p,m}(n \cdot T_S)$ und der zugehörigen Pfadlaufzeiten $\tau_{p,m}$ der insgesamt $N_m^P$ diskreten Echo-Pfade von allen $N_T$ Sendern:

$$h(\tau, n \cdot T_S) = \sum_{m=0}^{N_T-1} \sum_{p=0}^{N_m^P-1} h_{p,m}(n \cdot T_S) \cdot \delta(n \cdot T_S - \tau_{p,m}) \qquad (8)$$

Die einzelnen Pfadgewichte $h_{p,m}(n \cdot T_S)$ werden innerhalb der einzelnen OFDM-Symboldauern als konstant vorausgesetzt und sind zueinander unkorreliert. Sie sind einem stationären stochastischen Prozess entnommen, der eine von der Übertragungsumgebung abhängige Zeit-Frequenz-Korrelationsfunktion der Kanalübertragungsfunktion aufweist (WSSUS-Übertragungskanal: Wide-Sense-Stationary-Uncorrelated-Scattering-Übertragungskanal).

Innerhalb eines OFDM-Symbols können die einzelnen Abtastwerte $h_{n,l}$ der Kanalimpulsantwort, die gemäß Gleichung (9) in einem Vektor $\underline{h}_n$ zusammengefasst sind, mittels einer inversen Fourier-Transformation gemäß Gleichung (10) aus den Kanalübertragungsfaktoren $H_{n,k}$ in den einzelnen Frequenzträgern, die gemäß Gleichung (11) in einem Vektor $\underline{H}_n$ zusammengefasst sind, berechnet werden.

$$\underline{h}_n = \left[h_{n,0}, h_{n,1}, \ldots, h_{n,N_C-1}\right] \tag{9}$$

$$\underline{H}_n = \left[H_{n,0}, H_{n,1}, \ldots, H_{n,N_C-1}\right] \tag{10}$$

$$\underline{h}_n = F^{-1}\{\underline{H}_n\} \tag{11}$$

Die Fourier-Matrix $F$ mit der Dimension $N_C$ enthält dabei die Elemente Fk,l gemäß Gleichung (12):

$$F_{k,l} = e^{-j2\pi kl/N_C} \qquad k,l = 0,\ldots,N_C-1 \tag{12}$$

Die Gewinnung der für die Bestimmung des 1-ten Abtastwerts $h_{n,l}$ der Kanalimpulsantwort im n-ten Symbolintervall erforderlichen Kanalübertragungsfaktoren $H_{n,k}$ im n-ten Symbolintervall und im k-ten Frequenzträger wird mittels Kanalschätzung über in einem bestimmten Frequenz-Zeit-Raster übertragene Pilotsymbole realisiert. Diese im Abstand von $N_F$ Frequenz-träger und $N_D$ Symbolintervallen angeordneten Sende-Pilot-symbole $S_{n,\,k}$, sind dem Empfänger nach Position im Frequenz-Zeit-Übertragungsrahmen und nach Inhalt bekannt. Aus den im Frequenz-Zeit-Übertragungsrahmen empfangenen Pilotsym-bolen $R_{n,k}$ kann im Empfänger hieraus der Schätzwert $\hat{H}_{n,k}$ des Kanalübertragungsfaktors $H_{n,k}$ im n-ten Symbol intervall und im k-ten Frequenzträger ermittelt werden.

Durch Interpolation mittels Interpolationsfilter können aus den Schätzwerten $\hat{H}_{n,k}$ der Kanalübertragungsfaktoren $H_{n,k}$ interpolierte Werte $\tilde{H}_{n,k}$ der Kanalübertragungsfaktoren $H_{n,k}$ in einem feineren Frequenz-Zeit-Raster ermittelt werden. Die Interpolation kann zweidimensional oder eindimensional getrennt nach der Zeit- und Frequenz-Richtung erfolgen. Zur Erzielung einer höchsten Frequenz-Zeit-Genauigkeit bei der Bestimmung der Kanalübertragungsfunktion $H$ kann die Interpolaktion sogar innerhalb eines Symbolintervalls getrennt für jedes Symbolintervall und jeden Frequenzträger erfolgen. Für den Fall einer eindimensionalen Interpolation in Frequenzrichtung ergeben sich die interpolierten Werte $\tilde{H}_{n,k}$ der Kanalübertragungsfaktoren $H_{n,k}$ im n-ten Symbolintervall aus der Matrixmultiplikation der zugehörigen Schätzwerte $\hat{H}_{n,k}$ der Kanalübertragungsfaktoren $H_{n,k}$ im n-ten Symbolintervall mit den Elementen der Wienerschen Filtermätrix $W$ gemäß Gleichung (13):

$$\underline{\tilde{H}}_n = W \cdot \underline{\hat{H}}_n \tag{13}$$

Hierbei sind die interpolierten Werte $\tilde{H}_{n,k}$ der Kanalübertragungsfaktoren $H_{n,k}$ im n-ten Symbolintervall gemäß Gleichung (14) in einem Vektor $\underline{\tilde{H}}_n$ und die Schätzwerte $\hat{H}_{n,k}$ der Kanalübertragungsfaktoren $H_{n,k}$ im n-ten Symbolintervall gemäß Gleichung (15) in einem Vektor $\underline{\hat{H}}_n$ zusammengefasst.

$$\underline{\tilde{H}}_n = \left[\tilde{H}_{n,0}, \tilde{H}_{n,1}, \ldots, \tilde{H}_{n,N_C-1}\right] \tag{14}$$

$$\underline{\hat{H}}_n = \left[\hat{H}_{n,0}, \hat{H}_{n,1}, \ldots, \hat{H}_{n,N_C-1}\right] \tag{15}$$

Die im n-ten Symbolintervall und k-ten Frequenzträger empfangenen Symbole $R$ .. die gegenüber den gesendeten Symbolen $S_{n,k}$ auf dem OFDM-Übertragungskanal verzerrt werden, werden mit der inversen Schätzwerten $\hat{H}_{n,k}$

bzw. interpolierten Werten $\tilde{H}_{n,k}$ der Kanalübertragungsfunktion gemäß Gleichung (16) entzerrt.

$$\hat{D}_{n,k} = \begin{cases} \dfrac{R_{n,k}}{\hat{H}_{n,k}} \\ \dfrac{R_{n,k}}{\tilde{H}_{n,k}} \end{cases} \quad (16)$$

Aus dem entzerrten Empfangsymbol $\hat{D}_{n,k}$ gemäß Gleichung (16) wird in einer "harten Entscheidung" ein grober Schätzwert $\tilde{S}_{n,k}$ des Sendersymbols $S_{n,k}$ gemäß Gleichung (17) geschätzt und optional im Rahmen einer Remodulation in Kombination der "harten Entscheidung" mit einer nachfolgenden "weichen Entscheidung" mittels beispielsweise eines Interleavers und eines Viterbi-Dekodierers ein verbesserter Schätzwert $\tilde{\tilde{S}}_{n,k}$ des Sendesymbols $S_{n,k}$ gemäß Gleichung (18) geschätzt.

$$\tilde{S}_{n,k} = Q_1\left\{\hat{D}_{n,k}\right\} \quad (17)$$

$$\tilde{\tilde{S}}_{n,k} = Q_2\left\{\tilde{S}_{n,k}\right\} \quad (18)$$

Der Operator $Q_1\{\bullet\}$ beschreibt hierbei die "harte Entscheidung" und der Operator $Q_2\ \{\bullet\}$ die optionale "weiche Entscheidung".

Mit dem verbesserten Schätzwert $\tilde{\tilde{S}}_{n,k}$ des Sendesymbole $S_{n,k}$ und dem zugehörigen empfangenen Symbol $R_{n,k}$ wird in einem darauf folgenden Schätzer ein optimierter Schätzwert $\tilde{\tilde{\tilde{H}}}_{n,k}$ des Kanalübertragungsfaktors $H_{n,k}$ im n-ten Symbolintervall und k-ten Frequenzträger gemäß Gleichung (19) geschätzt.

$$\tilde{\tilde{\tilde{H}}}_{n,k} = \frac{R_{n,k}}{\tilde{\tilde{S}}_{n,k}} \quad (19)$$

Die Kanalübertragungsfunktion mit den gemäß Gleichung (19) optimierten Schätzwerten $\tilde{\tilde{\tilde{H}}}_{n,k}$ ist gegenüber den interpolierten Werten $\tilde{H}_{n,k}$ der Kanalübertragungsfunktion $H_{nk}$ nicht bandbegrenzt und stellt im Fall einer korrekten Entscheidung ein wirklichkeitsnaheres Abbild des OFDM-Übertragungskanals gegenüber den interpolierten Werten $\tilde{H}_{n,k}$ der Kanalübertragungsfunktion $H_{n,k}$ dar. Somit ist die mittels inverser Fourier-Transformation gemäß Gleichung (20) aus den optimierten Schätzwerten $\tilde{\tilde{\tilde{H}}}_{n,k}$ der Kanalübertragungsfunktion $H_{n,k}$ berechnete Kanalimpulsantwort $\tilde{\tilde{h}}_n$ in ihrer vollen Länge ermittelbar.

$$\tilde{\tilde{h}}_n = F^{-1}\left\{\tilde{\tilde{\tilde{H}}}_{n,k}\right\} \quad (20)$$

In Fig. 3 ist das Blockschaltbild der erfindungsgemäßen Vorrichtung zur Ermittlung einer unverkürzten Kanalimpulsantwort in einem OFDM-Übertragungssystemen dargestellt.

Aus dem ins Zwischenfrequenz- bzw. Basisband gemischte Empfangssignal $r(t)$ wird in einem Fourier-Transformator 1 das im n-ten Symbolintervall und im k-ten Frequenzträger übertragene Empfangs-Pilotsymbol $R_{n,k}$ ermittelt. In einem ersten Schätzer 2 des Empfängers wird aus dem empfangenen Pilotsymbol $R_{n,k}$ und dem zugehörigen, dem Empfänger bekannten Sende-Pilotsymbol $S_{n,k}$ ein Schätzwert $\hat{H}_{n,k}$ des Kanalübertragungsfaktors $H_{n,k}$ im n-ten Symbolintervall und im k-ten Frequenzträger geschätzt.

In einem nachfolgenden Interpolator 3 werden in Anlehnung an Gleichung (13) aus den einzelnen Schätzwerten $\hat{H}_{n,k}$ des Kanalübertragungafaktors $H_{n,k}$ Interpolationswerte $\tilde{H}_{n,k}$ des Kanalübertragungsfaktors $H_{n,k}$ in einem gegenüber dem Frequenz-Zeit-Raster der Schätzwerte $\hat{H}_{n,k}$ feineren Frequenz-Zeit-Raster berechnet.

Mit Hilfe der Schätzwerte $\hat{H}_{n,k}$ und der Interpolationswerte $\tilde{H}_{n,k}$ des Kanalübertragungsfaktors $H_{n,k}$ wird in einem nachfolgenden Entzerrer 4 das auf dem OFDM-Übertragungskanal verzerrte, empfangene Nutzdaten- oder Pilotsymbol $R_{n,k}$ gemäß Gleichung (16) entzerrt.

Aus dem entzerrten Empfangsymbol $\hat{D}_{n,k}$ wird in einem "harten Entscheider" 5 ein grober Schätzwert $\tilde{S}_{n,k}$ des zugehörigen Sendesymbols $S_{n,k}$ gemäß Gleichung (17) bestimmt. Optional kann in einem nachfolgenden "weichen Entscheider" 6 bestehend beispielsweise aus einem Interleaver und einem Dekodierer ein optimierter Schätzwert $\tilde{\tilde{S}}_{n,k}$ des Sendesymbole $S_{n,k}$ gemäß Gleichung (18) ermittelt werden.

In einem darauffolgenden zweiten Schätzer 7 wird anhand des Empfangssymbols $R_{n,k}$ und des optimierten Schätzwerts $\tilde{\tilde{S}}_{n,k}$ des Sendesymbols $S_{n,k}$ ein optimierter Schätzwert $\tilde{\tilde{H}}_{n,k}$ für den Kanalübertragungsfaktor $H_{n,k}$ gemäß Gleichung (19) in jedem Symbolintervall n und in jedem Frequenzträger k ermittelt. Schließlich wird in einem inversen Fourier-Transformator 8 aus den optimierten Schätzwerten $\tilde{\tilde{H}}_{n,k}$ für den Kanalübertragungsfaktor $H_{n,k}$ gemäß Gleichung (20) die Kanalimpulsantwort $\tilde{\tilde{h}}_{n}$ berechnet.

Im folgenden wird das erfindungsgemäße Verfahren zur Ermittlung der Kanalimpulsantwort in einem OFDM-Übertragungssystem anhand des Flussdiagramms in Fig. 4 erläutert:

In einem ersten Verfahrenschritt S10 werden aus den in einem bestimmten Frequenz-Zeit-Raster empfangenen Pilotsymbolen $R_{n,k}$ und den dem Empfänger bekannten zugehörigen gesendeten Pilotsymbolen $S_{n,k}$ Schätzwerte $\hat{H}_{n,k}$ für den Kanalübertragungsfaktor $H_{n,k}$ im Frequenz-Zeit-Raster der Pilotsymbole bestimmt.

In einem darauf folgenden Verfahrenschritt S20 werden gemäß Gleichung (13) ausgehend von den in Verfahrenschritt S10 ermittelten Schätzwerten $\hat{H}_{n,k}$ des Kanalübertragungsfaktors $H_{n,k}$ mit einem herkömmlichen Interpolationsverfahren - beispielsweise ein Optimierungsverfahren mit einer nach einem Minimum-Mean-Square-Error-Kriterium ermittelten Optimierungsgüte - interpolierte Werte $\tilde{H}_{n,k}$ des Kanalübertragungsfaktors $H_{n,k}$ in einem gegenüber dem Frequenz-Zeit-Raster der Pilotsymbole feineren Frequenz-Zeit-Raster ermittelt.

Der nächste Verfahrenschritt S30 beinhaltet die Entzerrung der empfangenen, auf dem OFDM-Übertragungskanal verzerrten Nutzdaten- bzw. Pilotsymbole $R_{n,k}$ mit Hilfe der inversen Schätzwerte $\hat{H}_{n,k}$ und inversen Interpolationswerte $\tilde{H}_{n,k}$ des Kanalübertragungsfaktors $H_{n,k}$ gemäß Gleichung (16). Die entzerrten Empfangsymbole $\hat{D}_{n,k}$ werden im nächsten Verfahrensschritt S40 in einem "harten Entscheider" zur Bestimmung von groben Schätzwerten $\tilde{S}_{n,k}$ für die zugehörigen gesendeten Nutzdaten- bzw. Pilotsymbole $S_{n,k}$ gemäß Gleichung (17) herangezogen.

Optimierte Schätzwerte $\tilde{\tilde{S}}_{n,k}$ für die gesendeten Nutzdaten- bzw. Pilotsymbole $S_{n,k}$ werden optional im darauf folgenden Verfahrenschritt S50 in einem "weichen Entscheider" - beispielsweise einem Viterbi-Dekodierer - gemäß Gleichung (18) ausgehend von den groben Schätzwerten $\tilde{S}_{n,k}$ der Sendersymbole $S_{n,k}$ ermittelt.

Aus den optimierten Schätzwerten $\tilde{\tilde{S}}_{n,k}$ for die gesendeten Nutzdatensymbole bzw. Pilotsymbole $S_{n,k}$ und den zugehörigen Empfangsymbolen $R_{n,k}$ werden im darauf folgenden Verfahrenschritt S60 in einem zweiten Schätzer optimierte Schätzwerte $\tilde{\tilde{H}}_{n,k}$ für den jeweiligen Kanalübertragungefaktor $H_{n,k}$ entsprechend Gleichung (19) bestimmt.

Im abschließenden Verfahrenschritt S70 wird mit Hilfe der inversen Fourier-Transformation gemäß Gleichung (20) aus den optimierten Schätzwerten $\tilde{\tilde{H}}_{n,k}$ des Kanalübertragungefaktors $H_{n,k}$ die unverkürzte Kanalimpulsantwort

$\tilde{\tilde{h}}_n$ berechnet.

Die Erfindung ist nicht auf die dargestellte Ausführungsform der erfindungsgemäßen Vorrichtung und des erfindungsgemäßen Verfahren zur Ermittlung der Kanalimpulsantwort in einem OFDM-Übertragungssystem beschränkt. Die Erfindung deckt neben dem vorgestellten, im Freauenzbereich durchgeführten Verfahren auch ein dem frequenzbereichsorientierten Verfahren entsprechendes Verfahren im Zeitbereich zur Bestimmung einer unverkürzten Kanalimpulsantwort ab.

## Patentansprüche

1. Verfahren zur Ermittlung einer unverkürzten Kanalimpulsantwort ( $\tilde{\tilde{h}}_n$ ) in einem OFDM-Übertragungssystem, deren Dauer größer als die Länge ($N_G$) des Guard-Intervalls ist, mittels einer ersten Schätzung des Kanalübertragungsfaktors $(H_{n,k})$ aus in Frequenz-Zeit-Positionen ($n,k$) eines gröberen Frequenz-Zeit-Rasters ($N_F$, $N_D$) empfangenen Pilotsymbolen $(R_{n,k})$, Interpolation des Kanalübertragungsfaktors ($H_{n,k}$) in Frequenz-Zeit-Positionen ($n,k$) eines feineren Frequenz-Zeit-Rasters und Berechnung der unverkürzten Kanalimpulsantwort ( $\tilde{\tilde{h}}_n$ ) mittels inverser Fourier-Transformation aus den geschätzten oder interpolierten Werten ($\hat{H}_{n,k}$, $\tilde{H}_{n,k}$) des Kanalübertragungsfaktors ($H_{n,k}$) in den Frequenz-Zeit-Positionen $(n,k)$ des feineren Frequenz-Zeit-Rasters,
wobei in den einzelnen Frequenz-Zeit-Positionen $(n,k)$ des feineren Frequenz-Zeit-Rasters mittels einer zweiten Schätzung optimierte Schätzwerte ( $\tilde{\tilde{H}}_{n,k}$ ) des Kanalübertragungsfaktors ($H_{n,k}$) aus Empfangssymbolen ($R_{n,k}$) und aus mittels Entscheidung aus Empfangssymbolen ($R_{n,k}$) geschätzten Sendesymbolen ($\tilde{S}_{n,k}$, $\tilde{\tilde{S}}_{n,k}$ ) bestimmt werden.

2. Verfahren zur Ermittlung der Kanalimpulsantwort nach Anspruch 1,
**dadurch gekennzeichnet,**
**dass** für die mittels Entscheidung geschätzten Sendesymbole ($\tilde{S}_{n,k}$, $\tilde{\tilde{S}}_{n,k}$ ) die zugehörigen mit den geschätzten und interpolierten Werten ($\hat{H}_{n,k}$, $\tilde{H}_{n,k}$) des Kanalübertragungsfaktors ($H_{n,k}$) in den einzelnen Frequenz-Zeit-Positionen $(n,k)$ entzerrten Empfangssymbole ($\hat{D}_{n,k}$) benutzt werden.

3. Verfahren zur Ermittlung der Kanalimpulsantwort nach Anspruch 1 oder 2,
**dadurch gekennzeichnet,**
**dass** die Entscheidung mittels "harter Entscheidung" erfolgt.

4. Verfahren zur Ermittlung der Kanalimpulsantwort nach Anspruch 3,
**dadurch gekennzeichnet,**
**dass** der "harten Entscheidung" eine "weiche Entscheidung", bevorzugt mittels Kanaldekodierung, nachfolgt.

5. Vorrichtung zur Ermittlung einer unverkürzten Kanalimpulsantwort ( $\tilde{\tilde{h}}_n$ ) in einem OFDM-Übertragungssystem, deren Dauer größer als die Länge ($N_G$) des Guard-Intervalls ist, mit einem ersten Schätzer (2) zur Ermittlung von Schätz-werten ($\hat{H}_{n,k}$) des Kanalübertragungsfaktors ($H_{n,k}$) aus in Frequenz-Zeit-Positionen ($n,k$) eines gröberen Frequenz-Zeit-Rasters ($N_F$, $N_D$) empfangenen Pilotsymbolen ($R_{n,k}$) , mit einem Interpolator (3) zur Ermittlung von Interpolationswerten ($\tilde{H}_{n,k}$) des Kanalübertragungs-faktors ($H_{n,k}$) in Frequenz-Zeit-Positionen $(n,k)$ eines feineren Frequenz-Zeit-Rasters
und mit einem inversen Fourier-Transformator (8) zur Berechnung der unverkürzten Kanalimpulsantwort ( $\tilde{\tilde{h}}_n$ ) aus den Schätz- und Interpolationswerten ($\hat{H}_{n,k}$, $\tilde{H}_{n,k}$) des Kanaltibertragungsfaktors ($H_{n,k}$) in Frequenz-Zeit-Positionen $(n,k)$ des feineren Frequenz-Zeit-Rasters,
wobei zwischen dem Interpolator (3) und dem inversen Fourier-Transformator (8) ein Entscheider (5,6) zur Schätzung von Sendesymbolen ($\tilde{S}_{n,k}$, $\tilde{\tilde{S}}_{n,k}$ ) aus zugehörigen Empfangssymbolen ($R_{n,k}$) und ein zweiter Schätzer (7) zur Schätzung von optimierten Schätzwerten ( $\tilde{\tilde{H}}_{n,k}$ ) des Kanalübertragungsfaktors ($H_{n,k}$) aus den Empfangssymbolen ($R_{n,k}$) und den daraus geschätzten Sendesymbolen ($\tilde{S}_{n,k}$, $\tilde{\tilde{S}}_{n,k}$ ) geschaltet ist.

6. Vorrichtung zur Ermittlung der Kanalimpulsantwort nach Anspruch 5,
**dadurch gekennzeichnet,**
**dass** zwischen dem Interpolator (3) und dem Entscheider (5) ein Entzerrer (4) zur Entzerrung der Empfangssymbole ($R_{n,k}$) mit den Schätz- und Interpolationswerten ($\hat{H}_{n,k}$, $\tilde{H}_{n,k}$) des Kanalübertragungsfaktors ($H_{n,k}$) geschaltet ist.

7. Vorrichtung zur Ermittlung der Kanalimpulsantwort nach Anspruch 5 oder 6,
**dadurch gekennzeichnet,**
**dass** dem Entscheider (5,6) ein "harter Entscheider" (5) ist.

8. Vorrichtung zur Ermittlung der Kanalimpulsantwort nach Anspruch 7,
**dadurch gekennzeichnet,**
**dass** dem "harten Entscheider" (5) ein "weicher Entscheider" (6), bevorzugt ein als "weicher Entscheider" (6) arbeitender Dekodierer (6), nachfolgt.

## Claims

1. Method for determining an unabbreviated channel-impulse response ( $\tilde{\tilde{h}}_n$ ) in an OFDM transmission system, of which the duration is greater than the length ($N_G$) of the guard interval, by means of a first estimation of the channel-transmission factor ($H_{n,k}$) from pilot symbols ($R_{n,k}$) received at frequency-time positions (*n,k*) of a relatively-coarse frequency-time raster ($N_F$, $N_D$), interpolation of the channel-transmission factor ($H_{n,k}$) at frequency-time positions (*n,k*) of a relatively-fine frequency-time raster and calculation of the unabbreviated channel-impulse response ( $\tilde{\tilde{h}}_n$ ) by means of inverse Fourier transform from the estimated or interpolated values ($\hat{H}_{n,k}$, $\tilde{H}_{n,k}$) of the channel-transmission factor ($H_{n,k}$) at the frequency-time positions (*n,k*) of the relatively-fine frequency-time raster,

wherein estimated values ( $\tilde{\tilde{H}}_{n,k}$ $H_{n,k}$) of the channel-transmission factor ($H_{n,k}$) optimised by means of a second estimation are determined at the individual frequency-time positions (*n,k*) of the relatively-fine frequency-time raster from received symbols ($R_{n,k}$) and from transmitted symbols ($\tilde{S}_{n,k}$, $\tilde{\tilde{S}}_{n,k}$ ) estimated by means of decision from received symbols ($R_{n,k}$).

2. Method for determining the channel-impulse response according to claim 1,
**characterised in that**,

for the transmitted symbols ($\tilde{S}_{n,k}$, $\tilde{\tilde{S}}_{n,k}$ ) estimated by means of decision, the associated received symbols ($\hat{D}_{n,k}$) equalised with the estimated and interpolated values ($\hat{H}_{n,k}$, $\tilde{H}_{n,k}$) of the channel-transmission factor ($H_{n,k}$) at the individual frequency-time positions (*n,k*) are used.

3. Method for determining the channel-impulse response according to claim 1 or 2,
**characterised in that**
the decision is implemented by means of "hard decision".

4. Method for determining the channel-impulse response according to claim 3,
**characterised in that**
the "hard decision" is followed by a "soft decision", preferably by means of channel decoding.

5. Device for determining an unabbreviated channel-impulse response ( $\tilde{\tilde{h}}_n$ ) in an OFDM transmission system, of which the duration is greater than the length *($N_G$)* of the guard interval, with a first estimator (2) for determining

estimated values ($\hat{H}_{n,k}$) of the channel-transmission factor ($H_{n,k}$) from pilot symbols ($R_{n,k}$) received at frequency-time positions *(n,k)* of a relatively-coarse frequency-time raster ($N_F$, $N_D$), with an interpolator (3) for determining interpolated values ($\tilde{H}_{n,k}$) of the channel-transmission factor ($H_{n,k}$) at frequency-time positions *(n,k)* of a relatively-fine frequency-time raster

and with an inverse Fourier transformer (8) for the calculation of the unabbreviated channel-impulse response ($\tilde{\tilde{h}}_n$) from the estimated and interpolated values ($\hat{H}_{n,k}$, $\tilde{H}_{n,k}$) of the channel-transmission factor ($H_{n,k}$) at frequency-time positions ($n,k$) of the relatively-fine frequency-time raster,

wherein a decision unit (5, 6) for estimating transmitted symbols ($\tilde{S}_{n,k}$ $\tilde{\tilde{S}}_{n,k}$) from associated received symbols ($R_{n,k}$)

and a second estimator (7) for estimating optimised estimated values ($\tilde{\tilde{\tilde{H}}}_{n,k}$) of the channel-transmission factor

($H_{n,k}$) from the received symbols ($R_{n,k}$) and the transmitted symbols ($\tilde{S}_{n,k}$, $\tilde{\tilde{S}}_{n,k}$) estimated from them, is connected between the interpolator (3) and the inverse Fourier transformer (8).

**6.** Device for determining the channel-impulse response according to claim 5,
**characterised in that**
an equaliser (4) for equalising the received symbols ($R_{n,k}$) with estimated and interpolated values ($\hat{H}_{n,k}$, $\tilde{H}_{n,k}$) of the channel-transmission factor ($H_{n,k}$) is connected between the interpolator (3) and the decision unit (5).

**7.** Device for determining the channel-impulse response according to claim 5 or 6,
**characterised in that**
the decision unit (5, 6) is a "hard decision unit" (5) .

**8.** Device for determining the channel-impulse response according to claim 7,
**characterised in that**
the "hard decision unit" (5) is followed by a "soft decision unit" (6), preferably a decoder (6) operating as "soft decision unit" (6).

## Revendications

**1.** Procédé de détermination d'une réponse d'impulsion de canal non raccourcie ($\tilde{\tilde{h}}_n$) dans un système de transmission OFDM, dont la durée est supérieure à la longueur ($N_G$) de l'intervalle de garde, au moyen d'une première évaluation du facteur de transmission de canal ($H_{n,k}$) à partir de symboles pilotes ($R_{n,k}$) reçus dans des positions fréquentielles-temporelles (n, k) d'une trame fréquentielle-temporelle grossière ($N_F$, $N_D$), d'une interpolation du facteur de transmission de canal ($H_{n,k}$) dans les positions fréquentielles-temporelles (n, k) d'une trame fréquentielle-temporelle plus fine et du calcul de la réponse d'impulsion de canal non raccourcie ($\tilde{\tilde{h}}_n$) au moyen d'une Transformation de Fourier inverse à partir des valeurs évaluées ou interpolées ($\hat{H}_{n,k}$, $\tilde{H}_{n,k}$) du facteur de transmission de canal ($H_{n,k}$) dans les positions fréquentielles-temporelles
(n, k) de la trame fréquentielle-temporelle plus fine,

dans lequel des valeurs d'évaluation optimisées ($\tilde{\tilde{H}}_{n,k}$) du facteur de transmission de canal ($H_{n,k}$) sont déterminées à partir de symboles de réception ($R_{n,k}$) et à partir de symboles d'envoi évalués ($\tilde{S}_{n,k}$, $\tilde{\tilde{S}}_{n,k}$) au moyen d'une décision à partir des symboles de réception ($R_{n,k}$) dans les différentes positions fréquentielles-temporelles (n, k) de la trame fréquentielle-temporelle plus fine grâce à une seconde évaluation.

**2.** Procédé de détermination de la réponse d'impulsion de canal selon la revendication 1, **caractérisé en ce que** les symboles de réception égalisés ($\hat{D}_{n,k}$) associés aux valeurs évaluées et interpolées ($\hat{H}_{n,k}$, $\tilde{H}_{n,k}$) du facteur de transmission de canal ($H_{n,k}$) dans les différentes positions fréquentielles-temporelles (n, k) sont utilisés pour les

symboles d'envoi ($\tilde{S}_{n,k}$, $\tilde{\tilde{S}}_{n,k}$) évalués grâce à une décision.

3. Procédé de détermination de la réponse d'impulsion de canal selon la revendication 1 ou 2, **caractérisé en ce que** la décision est effectuée grâce à une "décision stricte".

4. Procédé de détermination de la réponse d'impulsion de canal selon la revendication 3, **caractérisé en ce que** une "décision douce", de préférence grâce à un décodage de canal, suit la "décision stricte".

5. Dispositif de détermination d'une réponse d'impulsion de canal non raccourcie ($\tilde{\tilde{h}}_n$) dans un système de transmission OFDM, dont la durée est supérieure à la longueur ($N_G$) de l'intervalle de garde, comportant un premier évaluateur (2) pour déterminer des valeurs d'évaluation ($\hat{H}_{n,k}$) du facteur de transmission de canal ($H_{n,k}$) à partir de pilotes symboles ($R_{n,k}$) reçus dans des positions fréquentielles-temporelles (n, k) d'une trame fréquentielle-temporelle grossière ($N_F$, $N_D$),
comportant un interpolateur (3) pour déterminer des valeurs d'interpolation ($\tilde{H}_{n,k}$) du facteur de transmission de canal ($H_{n,k}$) dans des positions fréquentielles-temporelles (n, k) d'une trame fréquentielle-temporelle plus fine
et comportant un transformateur de Fourier inverse (8) pour calculer la réponse d'impulsion de canal non raccourcie ($\tilde{\tilde{h}}_n$) à partir des valeurs d'évaluation et d'interpolation ($\hat{H}_{n,k}$, $\tilde{H}_{n,k}$) du facteur de transmission de canal ($H_{n,k}$) dans des positions fréquentielles-temporelles (n, k) de la trame fréquentielle-temporelle plus fine,
dans lequel un moyen de décision (5, 6) pour évaluer les symboles d'envoi ($\tilde{S}_{n,k}$, $\tilde{\tilde{S}}_{n,k}$) à partir des symboles de réception associés ($R_{n,k}$) et un second évaluateur (7) pour évaluer des valeurs d'évaluation optimisées ($\tilde{\tilde{H}}_{n,k}$) du facteur de transmission de canal ($H_{n,k}$) à partir des symboles de réception ($R_{n,k}$) et des symboles d'envoi ($\tilde{S}_{n,k}$, $\tilde{\tilde{S}}_{n,k}$) évalués à partir de ceux-ci sont montés entre l'interpolateur (3) et le transformateur de Fourier inverse (8).

6. Dispositif de détermination de la réponse d'impulsion de canal selon la revendication 5, **caractérisé en ce que** un égaliseur (4) pour égaliser les symboles de réception ($R_{n,k}$) avec les valeurs d'évaluation et d'interpolation ($\hat{H}_{n,k}$, $\tilde{H}_{n,k}$) du facteur de transmission de canal ($H_{n,k}$) est monté entre l'interpolateur (3) et le moyen de décision (5).

7. Dispositif de détermination de la réponse d'impulsion de canal selon la revendication 5 ou 6, **caractérisé en ce que** le moyen de décision (5, 6) est un "moyen de décision stricte" (5).

8. Dispositif de détermination de la réponse d'impulsion de canal selon la revendication 7, **caractérisé en ce que** un "moyen de décision douce" (6), de préférence un décodeur (6) fonctionnant en tant que "moyen de décision douce" (6), suit le "moyen de décision douce" (5).

Fig. 1A

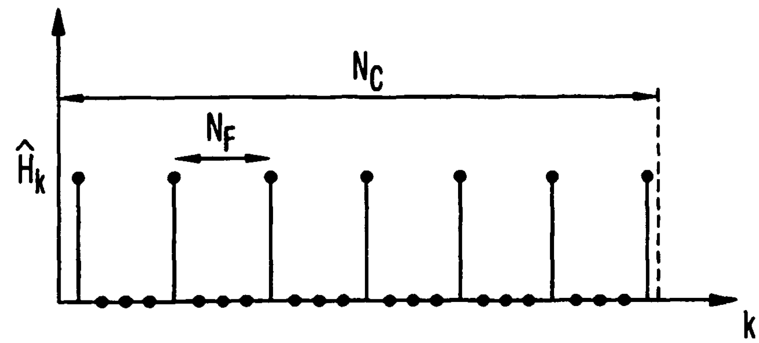


Fig. 1B

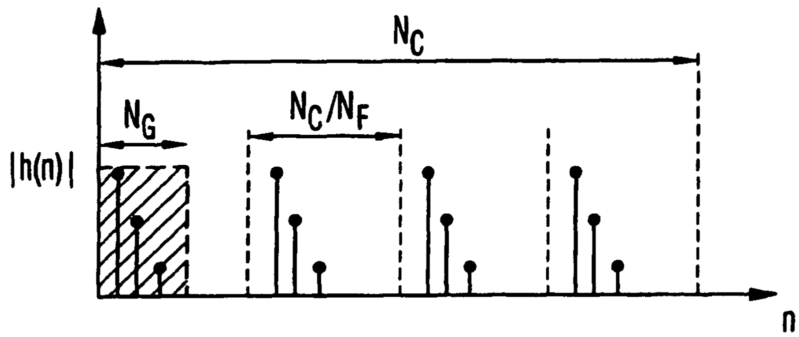


Fig. 1C

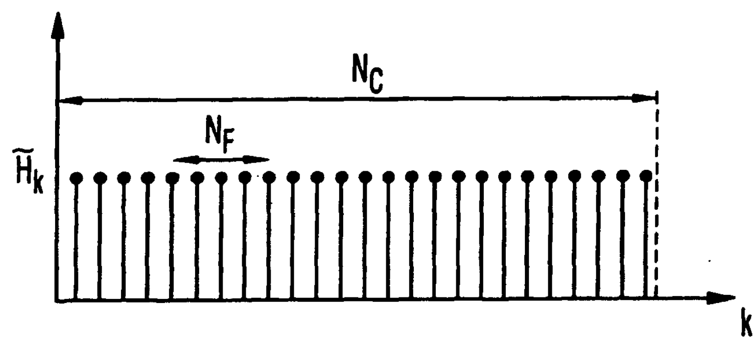


Fig. 1D

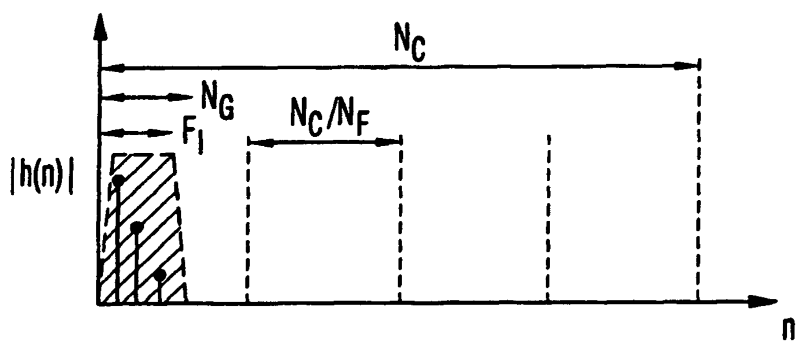


Fig. 1E

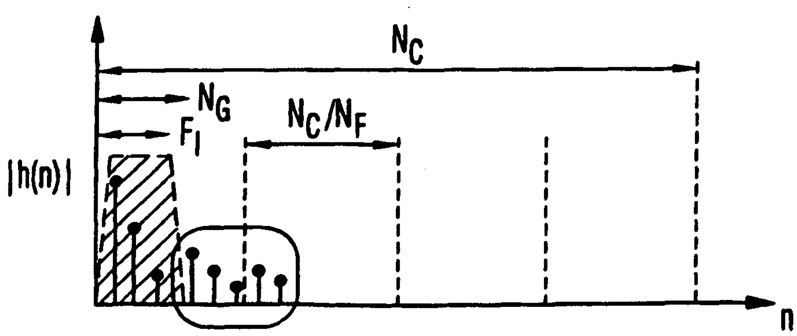

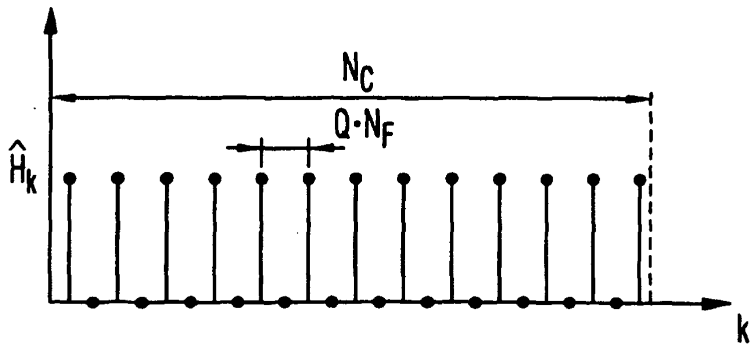


Fig. 2A

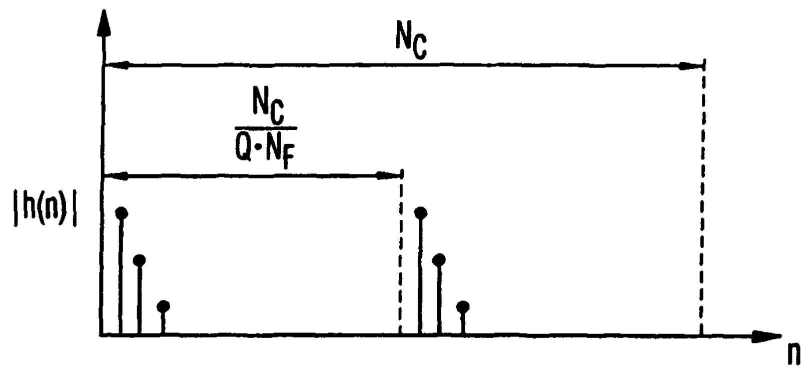


Fig. 2B

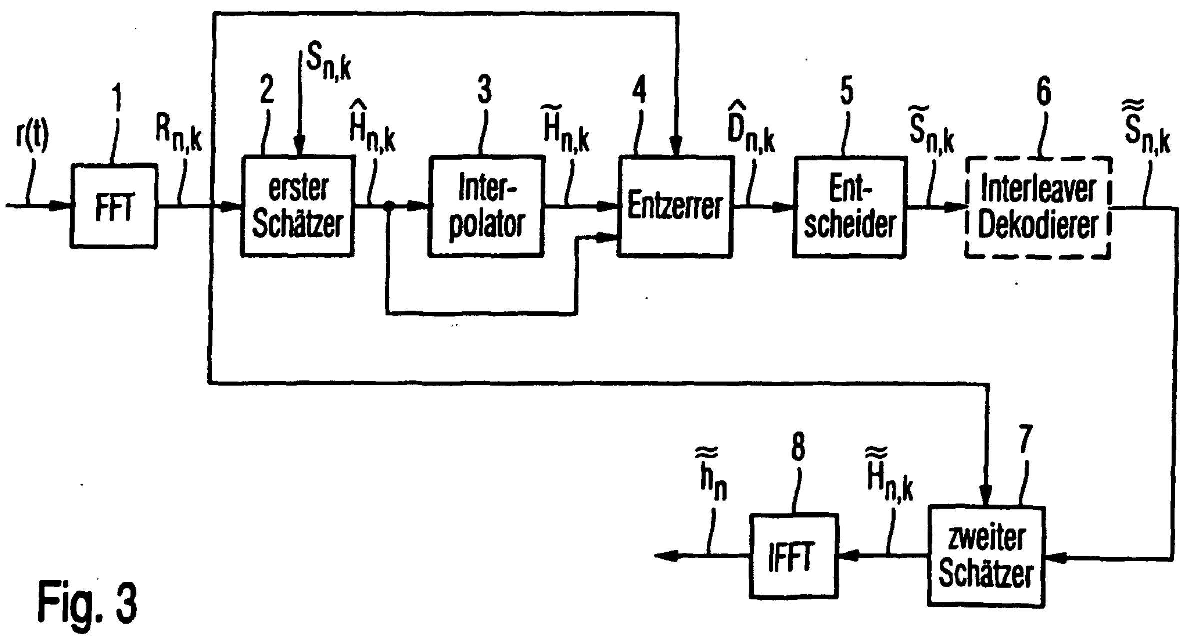


Fig. 3

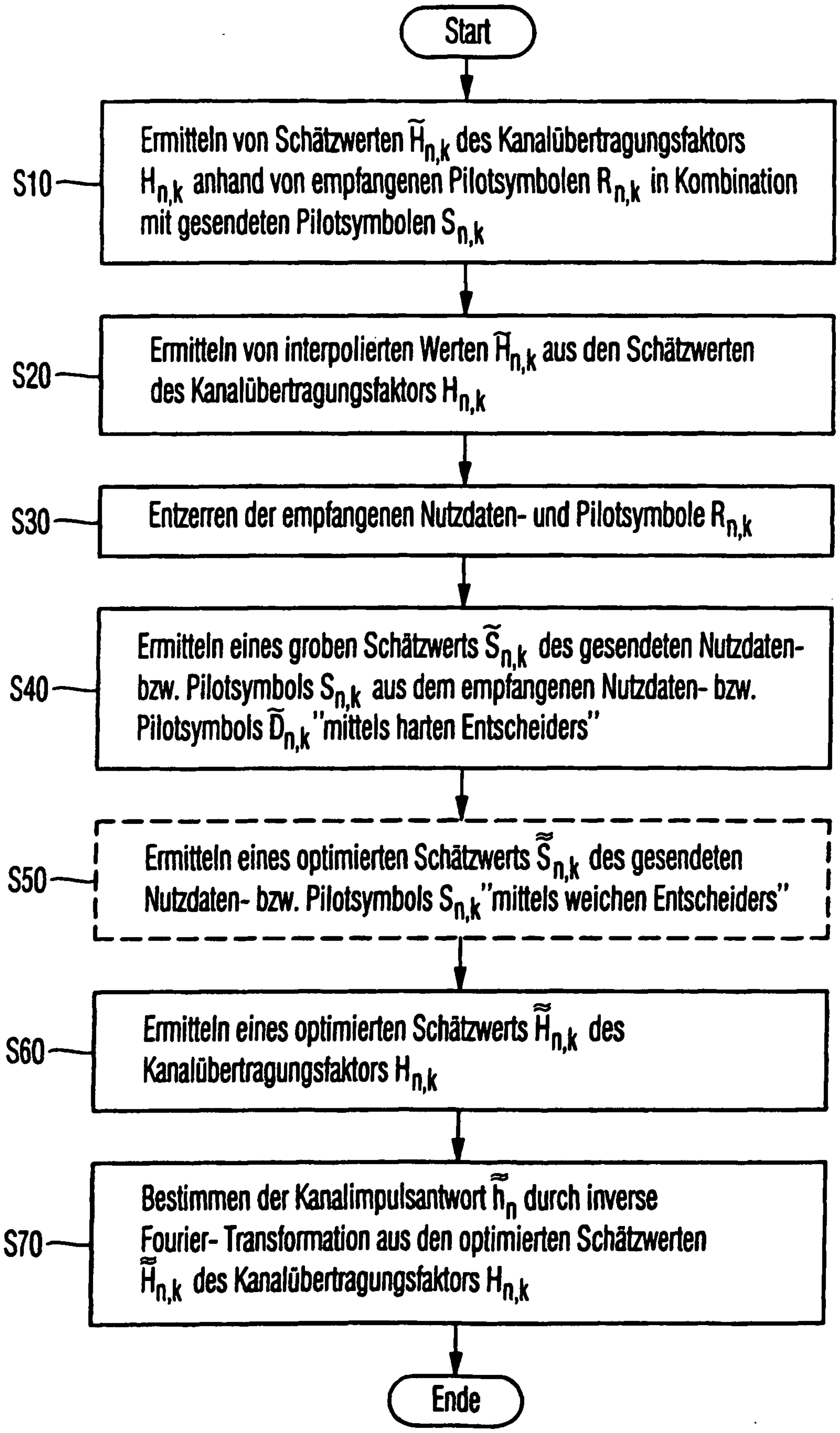
Start
S10
Ermitteln von Schätzwerten $\tilde{H}_{n,k}$ des Kanalübertragungsfaktors $H_{n,k}$ anhand von empfangenen Pilotsymbolen $R_{n,k}$ in Kombination mit gesendeten Pilotsymbolen $S_{n,k}$
S20
Ermitteln von interpolierten Werten $\tilde{H}_{n,k}$ aus den Schätzwerten des Kanalübertragungsfaktors $H_{n,k}$
S30
Entzerren der empfangenen Nutzdaten- und Pilotsymbole $R_{n,k}$
S40
Ermitteln eines groben Schätzwerts $\tilde{S}_{n,k}$ des gesendeten Nutzdaten- bzw. Pilotsymbols $S_{n,k}$ aus dem empfangenen Nutzdaten- bzw. Pilotsymbols $\tilde{D}_{n,k}$ "mittels harten Entscheiders"
S50
Ermitteln eines optimierten Schätzwerts $\tilde{\tilde{S}}_{n,k}$ des gesendeten Nutzdaten- bzw. Pilotsymbols $S_{n,k}$ "mittels weichen Entscheiders"
S60
Ermitteln eines optimierten Schätzwerts $\tilde{\tilde{H}}_{n,k}$ des Kanalübertragungsfaktors $H_{n,k}$
S70
Bestimmen der Kanalimpulsantwort $\tilde{\tilde{h}}_n$ durch inverse Fourier- Transformation aus den optimierten Schätzwerten $\tilde{\tilde{H}}_{n,k}$ des Kanalübertragungsfaktors $H_{n,k}$
Ende

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10005287 A1